Europäisches Patentamt

European Patent Office

Office européen des brevets

(11) Publication number: **0 390 191 B1**

# EUROPEAN PATENT SPECIFICATION

(45) Date of publication of patent specification: **02.11.94**

(21) Application number: **90106159.8**

(22) Date of filing: **30.03.90**

(51) Int. Cl.⁵: **C08J 5/18**, B29C 47/88,
B29C 55/14, B29C 71/02,
B29C 71/00, B29D 7/01,
//C08L67:02,B29K67:00,
B29L7:00

(54) **Biaxially stretched polyester film and process for producing the same.**

(30) Priority: **30.03.89 JP 79175/89**

(43) Date of publication of application:
**03.10.90 Bulletin 90/40**

(45) Publication of the grant of the patent:
**02.11.94 Bulletin 94/44**

(84) Designated Contracting States:
**AT BE CH DE DK ES FR GB GR IT LI LU NL SE**

(56) References cited:
**EP-A- 0 008 679
EP-A- 0 049 108
EP-A- 0 164 518
EP-B- 0 022 278
US-A- 4 617 164**

**DATABASE WPI, no. 80-26 051, DERWENT
PUBLICATIONS LTD, London, GB & JP-A-
55027250**

(73) Proprietor: **DIAFOIL HOECHST CO., LTD
28-10, Hongo 1-chome**

Bunkyo-ku Tokyo (JP)

(72) Inventor: **Utsumi, Shigeo
1786-1 Shimotsuruma
Yamato-shi, Kanagawa-ken (JP)**
Inventor: **Tomitaka, Kichinojo
5-6 Tsutsujigaoka,
Midori-ku
Yokohama-shi, Kanagawa-ken (JP)**
Inventor: **Fukuda, Yujiro, c/o Diafoil America
Inc.
299 Park Avenue
New York 10171 (US)**
Inventor: **Miki, Takatoshi
91-94 Yawata-Higashi-cho
Nagahama-shi, Shiga-ken (JP)**

(74) Representative: **TER MEER - MÜLLER - STEIN-
MEISTER & PARTNER
Mauerkircherstrasse 45
D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a process for producing a biaxially stretched polyester film having an excellent thickness uniformity, low shrinkage characteristics and good flatness and also minimized in or substantially free of scratches or scuffs, from a substantially amorphous film principally composed of polyethylene terephthalate.

For producing polyester films having a thickness of 25 $\mu$m or greater, a method has been known in which an amorphous sheet is stretched in the machine direction in a single step by using an IR heater.

The polyester films obtained from such a method, however, were susceptible to scratches or scuffs in the course of their production process and also poor in thickness uniformity, flatness and shrinkage characteristics in comparison with thin polyester films. There has therefore been desired a process capable of producing a polyester film which can satisfy all of these property requirements.

EP-B-0 022 278 discloses a process for producing a biaxially stretched polyester film wherein the stretching in the machine direction is conducted in a single step.

EP-A-0 049 108 relates to a process for producing biaxially oriented polyester films wherein the film is first drawn in the longitudinal direction to an extent such that the resulting polyester film possesses a birefringence of from 0.001 to 0.012.

The present inventors have pursued strenuous studies on the process for producing polyester films and, as a result, found that a polyester film which is hard to scratch and uniform in thickness can be obtained by employing a process which meets certain specific conditions. The present invention was achieved on the basis of such finding.

It has been the problem underlying the present invention to provide a process for producing a biaxially stretched polyester film having an excellent thickness uniformity, low shrinkage characteristics and good flatness and being substantially free from scratches on the surface thereof.

According to the present invention, this problem is solved by a process for producing a biaxially stretched polyester film according to claim 1.

In accordance with the process of the present invention, there is provided a biaxially stretched polyester film of 25 to 500 $\mu$m thickness comprising, as the constitutional repeating units, not less than 80 % by weight of terephthalic acid unit based on the dicarboxylic acid component and not less than 80% by weight of ethylene glycol unit based on the glycol component, which is substantially free from scratches on the surface thereof and has a thickness uniformity of 1.0 to 10 %, a heat shrinkage of 0.05 to 0.6 % after the treatment at 120°C for 30 min, and a heat shrinkage of 0.1 to 0.7 % after the treatment at 150°C for 30 min.

The polyethylene terephthalate (hereinafter abbreviated as PET) used in the present invention is a polyester in which 80 wt% or more of the acid component is constituted by terephthalic acid unit and 80 wt% or more of the glycol component is constituted by ethylene glycol unit. As other constituents of the acid component, there can be mentioned the units derived from a dicarboxylic acid such as oxalic acid, malonic acid, succinic acid, adipic acid, azelaic acid, sebacic acid, phthalic acid, isophthalic acid, naphthalenedicarboxylic acid and diphenyl ether dicarboxylic acid, and as other constituents of the glycol component there can be mentioned the unit derived from a diol such as propylene glycol, trimethylene glycol, tetramethylene glycol, hexamethylene glycol, diethylene glycol, triethylene glycol, polyalkylene glycol, 1,4-cyclohexanedimethanol and neopentyl glycol.

In the present invention, a blend of two or more different types of polyesters can be used as PET as far as the content of terephthalic acid unit and that of ethylene glycol unit in the blend are 80 wt% or more of the total acid component and the total glycol component, respectively.

PET used in the present invention may be added with phosphoric acid, phosphorous acid, their esters and inorganic particles (particles of silica, kaolin, calcium carbonate, calcium phosphate, titanium dioxide) at the stage of polymerization, or said inorganic particles, etc., may be blended in PET after polymerization.

These materials are added in an amount of usually 0.01 to 30 wt% based on PET. The inorganic particles are preferably of a size falling within the range of 0.001 to 10 $\mu$m.

A process for producing the thick polyester film in accordance with this invention will be described below.

First, the PET is dried well, then melt extruded into a form of sheet through an extruder controlled at, for example, 280 to 290°C, a filter and a die, and then cast onto a rotating cooling drum kept at 10 to 70 °C, thereby effecting quick quenching and solidification to obtain a sheet. In this operation, it is preferred to contact the sheet closely to the drum by making use of electrostatic casting technique. This sheet is substantially in an amorphous state (the sheet in this state being hereinafter referred to as sheet A). In the present invention, the thickness of sheet A is 400 $\mu$m or greater, preferably 500 $\mu$m or greater, more

2

preferably 800 $\mu$m or greater, further preferably 1,200 $\mu$m or greater.

The sheet A is preheated to a temperature (surface temperature) of 50 to 130 °C by passing the sheet between or around a series of preheating rolls kept at 50 to 150 °C, and then, stretched in the machine direction in a single or multiple stages by a series of stretching rolls comprising a first set of nip rolls (slowest rolls) and at least one set of succeeding nip rolls (fast rolls). Each set of succeeding nip rolls is driven at a peripheral speed faster than the speed of the set of nip rolls located just before it, thereby effecting the stretching by the speed difference between the slower and faster sets of rolls.

In this preheating and stretching operations, the preheating temperature and the film (sheet) surface temperature ($T_1$) at the point where the film parts from the surface of the slowest stretching nip rolls are so adjusted that the difference between the surface temperature ($T_0$) of the slowest stretching nip rolls and the stretching temperature (T), ($T_0$ - T), is -30 to 10 °C, preferably -25 to 5 °C, more preferably -20 to 0 °C. If the difference exceeds 10 °C, thickness uniformity of the final film will be impaired.

The surface temperature ($T_0$) is preferably in the range of 70 to 90 °C.

The stretch ratio in the machine direction ($\lambda_1$) is properly selected from the range of 1.2 to 4.0 times so that the index of birefringence ($\Delta n_1$) of the film after stretching will become $5.1 \times 10^{-2}$ or less.

The stretching temperature (T) is equal to $T_1$ in the case where the stretching is conducted in a single stage. In the case of multiple-stage stretching, the stretching temperature (T) is represented by a weighted mean calculated from the following equation.

$$T = \frac{\Sigma(\text{stretch ratio} \times \text{film surface temperature})}{\Sigma(\text{stretch ratio})}$$

For example, when the film is stretched 1.5 times at 85 °C (film surface temperature at the point where the film parts from the surface of the first stretching nip rolls (slowest rolls)) and then further stretched 1.2 times at 90 °C (film surface temperature at the point where the film parts from the surface of the second stretching rolls), the stretching temperature (T) is determined to be 87.2 °C from the following equation.

$$T = \frac{1.5 \times 85 + 1.2 \times 90}{1.5 + 1.2} = 87.2$$

In the present invention, stretching is preferably conducted so that $\Delta n_1$ will become $(75 - 0.625 \times T) \times 10^{-3}$ to $(125 - 0.875 \times T) \times 10^{-3}$, when $\Delta n_1$ is less than $(75 - 0.625 \times T) \times 10^{-3}$, film thickness may become non-uniform when the film is stretched in the transverse direction. On the other hand, when $\Delta n_1$ exceeds $(125 - 0.875 \times T) \times 10^{-3}$, break of film occurs frequently when the film is stretched in the transverse direction.

The obtained film, without being cooled to a temperature of glass transition point of the film or below, is again stretched 1.1 to 3.0 times ($\lambda_2$) either in a single stage or in multiple stages, preferably in the same series of stretching rolls as in the first stretching. The stretching temperature is 90 to 120 °C, preferably 95 to 110 °C, so that the index of birefringence $\Delta n_2$ after stretching will become 0.042 to 0.070, preferably 0.050 to 0.070, the stretching temperature being calculated in the same manner is in the first stretching.

The film stretched at a temperature below 90 °C or the film having an index of birefringence $\Delta n_2$ exceeding 0.070 tends to become relatively high in shrinkage in the machine direction after biaxial stretching. On the other hand, the film stretched at a temperature exceeding 120 °C suffers an excess degree of crystallization, which causes frequent break of film at the time of stretching in the transverse direction or roughening of the film surface. on the other hand, the film with its index of birefringence less than 0.042 often proves to be non-uniform in thickness.

In order to improve thickness uniformity of the film, it is preferred to perform the second machine-direction stretching at a stretching temperature lower than that of the first stretching. This measure proves particularly effective for improving thickness uniformity of thick films.

The product of stretch ratios in the respective runs of stretching in the machine direction (overall stretch ratio in the machine direction) is in the range of 3.0 to 5.0 times.

It is also preferred to properly select the stretching conditions so that the average refractive index $\bar{n}$ of the film after the second stretching in the machine direction will be in the range of 1.570 to 1.600. When $\bar{n}$ is less than 1.570, thickness uniformity is impaired, and when $\bar{n}$ exceeds 1.600, stretchability in the transverse direction is intolerably deteriorated.

As for the material of the rolls used in the present invention, it is preferred that a silicone rubber coated roll and/or a fluorocarbon resin coated roll is used for at least the rolls at the end of a series of preheating rolls. When performing preheating of sheet A, it is preferred to use a hard chrome-plated roll until the film surface temperature reaches to 80°C, a ceramic roll until the film surface temperature reaches to 90°C and a silicone rubber coated rolls or a fluorocarbon resin coated roll for heating the film to a surface temperature of exceeding 90°C.

In the present invention, ceramic rolls are preferably used as the stretching rolls. When producing a stretched film having a thickness of 25 μm or greater as in the present invention, a large stretching stress may arise, and therefore, the silicone rubber coated roll and the fluorocarbon resin coated roll are not preferred because of their poor wear resistance.

For further reducing the risk of scratching of the film surface by the rolls, the ceramic rolls are preferred so designed as to have a surface roughness (Rmax) of not more than 1 μm, preferably not more than 0.8 μm It is also possible to prevent scratching or scuffing by stretching the film without winding it on the rolls but by nipping it by the rolls so as to minimize the contact area between the film and each roll.

The film which has been stretched in the machine direction in the manner described above is then further stretched 3.2 to 5.0 times, preferably 3.5 to 4.0 times, in the transverse direction in a tenter to give a biaxially stretched film. This transverse stretching is conducted at a temperature of 95 to 140°C.

The thus obtained biaxially stretched film may be immediately subjected to a heat treatment at 130 to 250°C, but if necessary for meeting the specific property requirements, the stretched film may be relaxed 0.5 to 10 % in the transverse direction in the course of heat treatment, or may be relaxed 0.05 to 3 % in the machine direction and/or transverse direction after the heat treatment but before being wound onto a windup roll.

A coating layer may be formed on one or both surfaces of the polyester film of this invention by in-line coating method for providing the film with surface properties such as adhesiveness, releasability, antistatic properties, slipperiness, which are required according to the purpose of use of the film.

The biaxially stretched polyester film produced by the method of the present invention described above is substantially free from scratches (no scratch is noticed on the film surface by naked eye in fluorescent light) and has a thickness uniformity of 1.0 to 10 %, preferably 1.0 to 8.0 %, a heat shrinkage of 0,05 to 0.6%, preferably 0.05to 0.5 % after the treatment at 120°C for 30 min, a heat shrinkage of 0.1 to 0.7 %, preferably 0.1 to 0.6% after the treatment at 150°C for 30 min.

The thickness of the biaxially stretched film obtained according to the process of this invention is in the range of 25 to 500 μm.

The biaxially stretched polyester film produced according to the present invention can be applied to various use, but it finds particularly useful as films for touch panels, and membrane switches. Thus, the present invention is of high industrial utility.

The present invention will hereinafter be described in further detail by showing the examples thereof, but it is to be understood that these examples are merely intended to be illustrative and not to be construed as limiting the scope of the invention.

The methods used for determining the film properties are as described below.

(1) Heat shrinkage ( machine direction)

Each of the strip film samples was heat treated under a tension-free state in an atmosphere of 120°C or 150°C for 30 minutes, and the length of each of the samples before and after the heat treatment was measured, and the heat shrinkage of the film was determined from the following formula:

$$\text{Heat shrinkage (\%)} = \frac{(\text{sample length before heat treatment}) - (\text{sample length after heat treatment})}{(\text{sample length before heat treatment})} \times 100$$

(2) Thickness uniformity

Thickness in the machine direction of each sample of biaxially stretched film was measured by a continuous film thickness meter (using an electron micrometer) mfd. by Anritsu Denki Co., Ltd., and film thickness uniformity along the length of 15 meters was calculated from the following formula:

$$\text{Thickness uniformity (\%)} = \frac{\text{maximum thickness of film - minimum thickness of film}}{\text{average thickness of film}} \times 100$$

(3) Film surface temperature

Measured by using a Burns' thermometer.

(4) Index of birefringence

Measured by using an Abbe's refractometer.

(5) Flatness

The appearance of the film was observed visually and estimated according to the following ratings.

◎ : excellent
○ : good with no emboss and wrinkle.
△ : emboss or wrinkle was noticed under careful observation.
X : a lot of emboss or wrinkle.

(6) Scratch on the film surface

The appearance of the film was observed visually or under a microscope in fluorescent light and estimated according to the following ratings.

○ : no scratch was noticed.
△ : no scratch was noticed by naked eye, but slightly noticed under a microscope.
X : scratch was noticed by naked eye.
XX : scratch was clearly noticed by naked eye.

In the following Examples and Comparative Examples, all "parts" are by weight unless otherwise noted.

EXAMPLES 1, 2 and 3

Preparation of polyester chips

100 parts of dimethyl terephthalate, 70 parts of ethylene glycol and 0.07 part of calcium acetate monohydrate were supplied into a reactor and heated therein while evaporating away methanol. The mixture was heated to 230°C over a period of 4.5 hours after start of the reaction to substantially complete the ester exchange reaction.

The reaction mixture was then further added with 0.04 part of phosphoric acid and 0.035 part of antimony trioxide and polymerized by a conventional method. That is, the reaction temperature was gradually raised till reaching finally 280°C while pressure was gradually reduced to 66.6 Pa (0.5 mmHg). The reaction was completed in 4 hours, and the reaction product was made into chips in a usual way to obtain a polyester (A).

Separately from the above operations, there was obtained an amorphous silica-containing polyester (B) by following the same process as preparation of polyester (A) except that 0.13 part of amorphous silica having an average particle size of 1.2 $\mu$m was added after the end of ester exchange reaction.

There was also obtained an amorphous silica-containing polyester (C) in the same way as preparation of polyester (B) except for use of amorphous silica having an average particle size of 30 $\mu$m in an amount of 0.05 part.

Production of film

The polyester (A), polyester (B) and polyester (C) were blended in a ratio of 60 : 15 : 25, and the blend was air dried at 180°C for 4 hours, melt extruded at 285°C and cooled and solidified on a casting drum to obtain an amorphous sheet. In the cooling and solidifying operation, the film was attached closely to the drum by using a conventional electrostatic casting method, The thickness of the obtained unstretched film is shown in Table 1.

The unstretched film was first preheated by three hard chrome-plated rolls, 150 mm in diameter, kept at 60 to 75°C, further preheated by five ceramic rolls, 150 mm in diameter, kept at 80 to 90°C, and then additionally preheated by seven PFA (tetrafluoroethylene-perfluoroalky/vinyl ether copolymer) rolls, 150 mm in diameter, kept at 91 to 110°C. The preheated film was guided to the ceramic stretching rolls kept at 85°C and thereby stretched 1.5 times at 105°C and 2.0 times at 100°C.

The index of birefringence $\Delta n_1$ of the obtained film was 0.030.

Then this film, without being cooled to $T_g$ or below, was further stretched 1.3 times (EXAMPLE 1), 1.4 times (EXAMPLE 2) and 1.5 times (EXAMPLE 3) in the machine direction at 97°C to obtain the films having an index of birefringence after machine-direction stretching ($\Delta n_2$) of 0.048 (EXAMPLE 1), 0.055 (EXAMPLE 2) and 0.067 (EXAMPLE 3). These films were then stretched 3.5 times in the transverse direction at 110°C and heat set at 242°C to obtain the films having a thickness of 100 $\mu$m.

The properties of the obtained films and their evaluation results are shown in Table 1.

COMPARATIVE EXAMPLES 1 to 3

An unstretched film was made by using the same materials as employed in Examples described above, and this unstretched film was preheated by three hard chrome-plated rolls kept at 60 to 70°C, further preheated by two ceramic rolls kept at 80 to 95°C, and then stretched by ceramic rolls of 93°C. In this treatment, roll surface temperature $T_0$ was 93°C and film surface temperature $T_1$ was 82°C.

When two samples of this film were biaxially stretched so that $\Delta n_1$ would become 0.050 (Comparative Example 1) and 0.070 (Comparative Example 2), respectively, each of the obtained films had cross-stripes and were also poor in thickness uniformity.

When preheating temperature and stretching roll temperature were raised to 90 to 105°C and 103°C to stretch at a higher temperature (the film surface temperature) of 90°C, the film adhered to the rolls, causing non-uniformity of film thickness. Thus, the obtained film was a defective one.

Also, when a biaxially stretched film with $\Delta n_1$ of 0.105 was produced (Comparative Example 3), the obtained film, although having satisfactory flatness and thickness uniformity, showed a very large shrinkage.

6

## Table 1

| | Unstretched film thickness (μm) | Overall stretch ratio in machine direction | $\Delta n_1$ | $T_0$ (°C) | $T$ (°C) | $T_0-T$ (°C) | Stretch ratio $\lambda_1$ | $\Delta n_2$ | Stretch ratio $\lambda_2$ | Shrinkage(%) 120°C | Shrinkage(%) 150°C | Thickness uniformity (%) | Flatness | Scratch |
|---|---|---|---|---|---|---|---|---|---|---|---|---|---|---|
| EXAMPLE 1 | 1365 | 3.9 | 0.030 | 85 | 102 | -17 | 3.0 | 0.048 | 1.3 | 0.2 | 0.3 | 7 | O | ◎ |
| 2 | 1470 | 4.2 | 0.030 | 85 | 102 | -17 | 3.0 | 0.055 | 1.4 | 0.3 | 0.4 | 5 | O | O |
| 3 | 1575 | 4.5 | 0.030 | 85 | 102 | -17 | 3.0 | 0.067 | 1.5 | 0.5 | 0.6 | 3 | ◎ | O |
| COMPARATIVE EXAMPLE 1 | 980 | 2.8 | 0.050 | 93 | 82 | 11 | 2.8 | − | − | 0.6 | 0.9 | 18 | × | × |
| 2 | 1155 | 3.3 | 0.070 | 93 | 82 | 11 | 3.3 | − | − | 0.7 | 1.0 | 13 | × | × |
| 3 | 1295 | 3.7 | 0.105 | 93 | 82 | 11 | 3.7 | − | − | 0.7 | 1.2 | 7 | O | ×× |

## Claims

1. A process for producing a biaxially stretched polyester film of 25 to 500 $\mu$m thickness, the film being substantially free from scratches on the surface thereof and having a low shrinkage, a uniform thickness and an improved flatness, which comprises the steps of:

extruding a molten polyester resin comprising, as the constitutional repeating units, not less than 80 % by weight of terephthalic acid unit based on the dicarboxylic acid component and not less than 80% by weight of ethylene glycol unit based on the glycol component onto a cooling drum to cool and solidify the molten polyester resin thereby forming a substantially amorphous sheet having a thickness of 400 $\mu$m or greater;

preheating the sheet to a surface temperature of 50 to 130 °C by passing the sheet between or around a series of preheating rolls;

stretching the preheated sheet 1.2 to 4.0 times in the machine direction in a single or multiple stages by a series of stretching rolls comprising a set of the slowest nip rolls and at least one set of succeeding nip rolls at a stretching temperature of 85 to 120 °C, by maintaining the difference between the surface temperature of the slowest nip rolls and the stretching temperature from -30 to 10 °C, so that the resultant stretched film has an index of birefringence of 5.1 x $10^{-2}$ or less, the stretching temperature (T) being represented by the following formula:

$$T = \frac{\Sigma(\text{stretch ratio} \times \text{film surface temperature})}{\Sigma(\text{stretch ratio})}$$

further stretching the film 1.1 to 3.0 times in the machine direction in a single or multiple stages by a series of stretching rolls comprising at least two sets of nip rolls at a stretching temperature of 90 to 120 °C without cooling the film to a temperature of the glass transition point of the film or less, so that the overall stretch ratio in the machine direction is in the range of 3.0 to 5.0 times and the resultant stretched film has an index of birefringence of 0.042 to 0.70, the stretching temperature being represented by the same formula as in the first stretching;

stretching the thus stretched film 3.2 to 5.0 times in the transverse direction at a temperature of 95 to 140 °C; and

subjecting the biaxially stretched film to a heat treatment at a temperature of 130 to 250 °C with or without 0.5 to 10 % relaxation in the transverse direction.

2. The process according to claim 1, wherein at least a set of rolls at the end of the series of preheating rolls are a silicon rubber coated roll and/or a fluorcarbon resin coated roll.

3. The process according to claim 1, wherein the stretching rolls are ceramic rolls.

4. The process according to claim 1, wherein the second stretching in the machine direction is conducted at a stretching temperature lower than the stretching temperature of the first stretching.

5. The process according to claim 1, wherein the heat-treated film is further subjected to 0.05 to 3 % relaxation in the machine direction and/or transverse direction after the heat treatment but before being wound onto a windup roll.

## Patentansprüche

1. Verfahren zur Herstellung einer biaxial gereckten Polyesterfolie einer Dicke von 25 bis 500 $\mu$m, wobei die Folie auf ihrer Oberfläche im wesentlichen frei an Kratzern ist und eine geringe Schrumpfung, eine gleichmäßige Dicke und eine verbesserte Ebenheit aufweist, umfassend die Schritte:

Extrudieren eines geschmolzenen Polyesterharzes, welches als aufbauende, wiederkehrende Einheiten nicht weniger als 80 Gew.-% Terephthalsäureeinheiten, bezogen auf die Dicarbonsäurekomponente, und nicht weniger als 80 Gew.-% Ethylenglykoleinheiten, bezogen auf die Glykolkomponente, umfaßt, auf eine Kühlwalze, um das geschmolzene Polyesterharz zu kühlen und zu verfestigen, wodurch ein im wesentlichen amorphes Blatt mit einer Dicke von 400 $\mu$m oder mehr gebildet wird;

Vorerwärmen des Blatts auf eine Oberflächentemperatur von 50 bis 130°C durch Hindurchführen des Blatts zwischen oder um eine Reihe von Vorerwärmungswalzen herum;

Recken des vorerwärmten Blatts um das 1,2 bis 4,0-fache in der Maschinenrichtung in einer einzigen oder mehreren Stufen durch eine Reihe von Reckwalzen, umfassend einen Satz der langsamsten Spaltwalzen und mindestens einen Satz nachfolgender Spaltwalzen, bei einer Recktemperatur von 85 bis 120°C, indem der Unterschied zwischen der Oberflächentemperatur der langsamsten Spalzwalzen und der Recktemperatur bei -30 bis 10°C gehalten wird, so daß die resultierende gereckte Folie einen Doppelbrechungsindex von 5,1 x 10$^{-2}$ oder weniger aufweist, wobei die Recktemperatur (T) durch die folgende Formel angegeben wird:

$$T = \frac{\Sigma \; (\text{Reckverhältnis x Filmoberflächentemperatur})}{\Sigma \; (\text{Reckverhältnis})}$$

Weiteres Recken der Folie um das 1,1 bis 3,0-fache in der Maschinenrichtung in einer einzigen oder mehreren Stufen durch eine Reihe von Reckwalzen, umfassend mindestens zwei Sätze von Spaltwalzen, bei einer Recktemperatur von 90 bis 120°C ohne Kühlen der Folie auf eine Temperatur des Glasübergangspunktes der Folie oder weniger, so daß das Gesamtreckverhältnis in der Maschinenrichtung im Bereich von dem 3,0 bi 5,0-fachen liegt und die resultierende, gereckte Folie einen Doppelbrechungsindex von 0,042 bis 0,70 aufweist, wobei die Recktemperatur durch die gleiche Formel wie bei der ersten Reckung angegeben wird;

Recken der so gereckten Folie um das 3,2 bis 5,0-fache in der Querrichtung bei einer Temperatur von 95 bis 140°C; und

Unterziehen der biaxial gereckten Folie einer Wärmebehandlung bei einer Temperatur von 130 bis 250°C mit oder ohne eine 0,5 bis 10 %-ige Relaxation in der Querrichtung.

2. Verfahren nach Anspruch 1, wobei mindestens ein Satz Walzen am Ende der Reihe der Vorerwärmungswalzen mit Silikonkautschuk beschichtete Walzen und/oder mit Fluorkohlenstoffharz beschichtete Walzen sind.

3. Verfahren nach Anspruch 1, wobei die Reckwalzen Keramikwalzen sind.

4. Verfahren nach Anspruch 1, wobei die zweite Reckung in der Maschinenrichtung bei einer Recktemperatur durchgeführt wird, welche niedriger ist als die Recktemperatur der ersten Reckung.

5. Verfahren nach Anspruch 1, wobei die wärmebehandelte Folie nach der Wärmebehandlung, jedoch vor dem Aufwickeln auf eine Aufwickelwalze weiterhin einer 0,05 bis 3 %-igen Relaxation in der Maschinenrichtung und/oder Querrichtung unterzogen wird.

**Revendications**

1. Procédé de fabrication d'un film polyester étiré biaxialement ayant une épaisseur comprise entre 25 et 500 microns, le film étant pratiquement exempt de rayures à sa surface et ayant un retrait faible, une épaisseur uniforme et une planéité améliorée, qui comprend les étapes suivantes:

- l'extrusion d'une résine polyester fondue comprenant, comme motifs répétitifs de constitution, au moins 80% en poids de motif acide téréphtalique par rapport au composant acide dicarboxylique et au moins 80% en poids de motif éthylène glycol par rapport au composant glycol sur un tambour de refroidissement pour refroidir et solidifier la résine polyester fondue formant ainsi une feuille pratiquement amorphe ayant une épaisseur supérieure ou égale à 400 microns;
- le préchauffage de la feuille à une température de surface comprise entre 50 et 130 °C en faisant passer la feuille entre ou autour d'une série de rouleaux de préchauffage;
- l'étirage de la feuille préchauffée d'un facteur de 1,2 à 4,0 suivant la direction machine en une ou plusieurs étapes au moyen d'une série de rouleaux d'étirages comprenant un jeu de rouleaux à contact linéaire les plus lents et au moins un jeu de rouleaux à contacts linéaires successifs à une température d'étirage comprise entre 85 et 120°C, en maintenant la différence entre la température de surface des rouleaux à contact linéaire les plus lents et la température d'étirage comprise entre -30 et 10 °C, de telle sorte que le film étiré résultant a un index de biréfringence inférieur ou égal à 5.1 x 10$^{-2}$, la température d'étirage ( T) étant représentée par la formule suivante:

# EP 0 390 191 B1

$$T = \frac{\Sigma \text{ (rapport d'étirage x température de la surface du film)}}{\Sigma \quad \text{( rapport d'étirage)}}$$

- l'étirage supplémentaire du film d'un facteur de 1,1 à 3,0 suivant la direction machine en une plusieurs étapes au moyen d'une série de rouleaux d'étirage comprenant au moins deux jeux de rouleaux à contact linéaire à une température d'étirage comprise entre 90 et 120°C sans refroidissement du film à une température inférieure ou égale au point de transition vitreuse du film, de telle sorte que le rapport d'étirage total suivant la direction machine est compris entre 3,0 et 5,0 et le film étiré résultant a un index de biréfringence compris entre 0,042 et 0,70, la température d'étirage étant représentée par la même formule que pour le premier étirage;
- l'étirage du film ainsi étiré d'un facteur de 3,2 à 5,0 suivant la direction transversale à une température comprise entre 95 et 140 °C ; et
- le traitement thermique du film étiré biaxialement à une température comprise entre 130 et 250°C avec ou sans 0,5 à 10% de relaxation suivant la direction transversale.

2. Procédé selon la revendication 1, dans lequel au moins un jeu de rouleaux à la fin de la série de rouleaux de préchauffage est composé de rouleaux revêtus de caoutchouc de silicone et/ou de rouleaux revêtus de résine de fluorocarbones.

3. Procédé selon la revendication 1, dans lequel les rouleaux d'étirage sont des rouleaux en céramique.

4. Procédé selon la revendication 1, dans lequel le deuxième étirage suivant la direction machine est opéré à une température d'étirage inférieure à la température d'étirage du premier étirage.

5. Procédé selon la revendication 1, dans lequel le film traité par voie thermique est en outre soumis à une relaxation de 0,05 à 3% suivant la direction machine et/ou la direction transversale après le traitement thermique mais avant d'être enroulé sur une bobine.

10